# EUROPEAN PATENT SPECIFICATION

(11) **EP 3 440 005 B1**
(45) Date of publication and mention of the grant of the patent: **31.05.2023**
(21) Application number: 17719301.8
(22) Date of filing: 06.04.2017
(51) Int. Cl.: B66F 11/04, E04G 1/22, B60T 1/00, E04G 5/10, E04G 5/14, E06C 1/397, E06C 7/02, E06C 7/18, F16D 63/00, E06C 7/16

(54) **PERSONNEL LIFT**
PERSONENAUFZUG
DISPOSITIF DE LEVAGE DE PERSONNEL

(30) Priority: 06.04.2016 FI 20165299
(43) Date of publication of application: 13.02.2019
(73) Proprietor: Ixolift Oy, 02330 Espoo (FI)
(72) Inventor: STENDAHL, Mikael, 02660 Esbo (FI); FRIIS, Johan, 21760 Houtskär (FI); PIETIKÄINEN, Mauri, 02400 Kirkkonummi (FI); SIMILÄ, MIka, 05460 Hyvinkää (FI); SALMINEN, Hannu, 02610 Espoo (FI)
(74) Representative: Heinonen & Co
(86) International application number: PCT/FI2017/050245
(87) International publication number: WO 2017/174877

(56) References cited:
- EP-A2- 2 420 469
- DE-A1-102010 036 409
- FR-A1- 2 984 292
- US-A- 2 972 392
- US-A- 5 158 157
- US-B1- 6 352 138

## Description

### FIELD OF THE INVENTION

Generally the present invention relates to personnel lifts. In particular, however not exclusively, the present invention pertains to vertically extendable personnel lifts.

### BACKGROUND

Personnel lifts are used for many different purposes. Personnel lifts may be utilized for maintenance work such as painting, restoring and cleaning of locations higher up from the ground level. For example, building outer walls may need painting, or windows on a higher ground may need cleaning. Such locations may be difficult to reach with normal ladders. Performing maintenance tasks on normal ladders is not only in many cases difficult, but also dangerous and illegal. Normal ladders tend not to be sturdy and tend not to comprise a solid work platform. For example, an EU directive forbids working from normal ladders over 1m over the ground. In Finland, the Government decree 205/2009 on Construction work safety forbids working from ladders supported against the wall, and A-ladders are only allowed for short and light work. Other country or industry specific rules sets similar or even stricter safety demands.

On the other hand, personnel lifts today have a lot of deficiencies as well. The elevating means such as a gas spring, and dampening means arranged to control the gas spring, may form a complicated structure. The gas spring and dampening means are two separate units that need to function together. However, it is often difficult to combine these two to a seamless entity.

The gas spring and dampening means provide separate forces to a lift structure which results in unwanted torque. Torque on the other hand increases friction which makes it difficult to fit the forces of the gas spring and dampening means with each other. It is also difficult to fit the trajectories of the two. These shortcomings may result in that the movement of the moving platform is unstable, and the moving platform may 'bump' in the receiving upper and lower ends of the lift's trajectory.

Unstable movement and the occurring bumps are unpleasant for a person standing on the moving platform and in some cases these may even become safety issues.

Today most lifts also need to rely on an external power source such as a motor to elevate a work platform. Most lifts are designed to elevate the work platform while a person is standing on the platform.

It is also important that the personnel lift has a brake in wheels so that the person is locked in its place and does not move in horizontal direction when a person works on the platform. In a prior art personnel lift a brake is manually switched on by the user. However, it is possible that the user does not remember to activate the brake, which then involves a safety risk. A further safety risk may relate to locking holes for locking the platform. When the platform is moved vertically a person may have a finger in the hole and get hurt by the structure moving onto the locking hole.

Documents US 5 158 157 A, DE 10 2010 036409 A1 both of which disclose the preamble of claim 1, and EP 2 420 469 A2 are known from the prior art. Document US 5 158 157 A discloses a vertically adjustable work station assembly, document DE 10 2010 036409 A1 discloses a mobile personnel lift and document EP 2 420 469 A2 discloses a mast lift with screw drive and gas strut. All of the disclosed solutions have some drawbacks, especially for elevating and lowering the work platform.

### SUMMARY OF THE INVENTION

The objective is to solve or at least alleviate the problems described hereinabove not satisfactorily solved by the known arrangements, and to provide a feasible personnel lift. One objective is to provide a feasible personnel lift comprising a gas spring with integrated dampening means for allowing controlled movement of the work platform. Another objective is to provide a personnel lift that does not require an external power source such as a motor for elevating the platform.

The aforesaid objective is achieved by the embodiments of a system in accordance with the present invention. The objective may be achiveved with an embodiment presented in claim 1.

According to the present invention a personnel lift for elevating a work platform comprises
- a base structure for securing the lift to the ground,
- a work platform that is essentially vertically movable, and
- a gas spring for elevating an empty work platform.

In one embodiment the gas spring provides a force for elevating an empty work platform. In one embodiment the gas spring provides a force that is preferably 100-2000N, more preferably 300-1500N and most preferably 500N-1000N for elevating the empty work platform.

In another embodiment the gas spring, when released, lowers the work platform by a load of a person, preferably 50-150kg.

In a further embodiment the gas spring comprises integrated dampening means for allowing controlled vertical movement.

According to the invention the lift comprises a telescopic mast for allowing the work platform to move substantially vertically.

In a further, either supplementary or alternative, embodiment the mast comprises at least two hollow structural sections wherein a first hollow structural section is arranged to the base structure and a second hollow structural section is arranged to the work platform, and wherein the second hollow structural section is arranged to move along the first hollow structural section. In one embodiment the gas spring is arranged inside of the at least two hollow structural sections.

According to the invention the lift comprises first means for actuating the gas spring for elevating the work platform, and second means for releasing the gas spring for lowering the work platform by the weight of the person on the work platform.

The first means are arranged in the lower end of the telescopic mast such that the first means may be operated from the ground level, and wherein the second means are arranged in the upper end of the telescopic mast such that the second means may be operated from the work platform.

In a further, either supplementary or alternative, embodiment the work platform comprises a cage structure for securing a person on the work platform.

In a further, either supplementary or alternative, embodiment the lift comprises wheels for moving the lift on the ground.

In a further, either supplementary or alternative, embodiment the lift comprises ladders allowing a person to enter the work platform.

In a further, either supplementary or alternative, embodiment the ladders comprises at least two separate sections of steps such that a first section of steps is arranged to the base structure and a second section of steps is arranged to the work platform, and wherein the second section of steps moves along with the work platform, and wherein the first and second section of steps form continuous steps when the work platform is elevated.

The utility of the present invention follows from a plurality of factors depending on each particular embodiment. Some embodiments of the present invention may provide a personnel lift with simply structured elevating means. Some embodiments may have a gas spring with integrated dampening means that provides controlled movement for the moving platform. In some embodiments the movement of the moving platform may remain almost constant without being affected by the force/weight of the person operating on the platform. Some embodiments of the personnel lift may provide a grounded structure. Some embodiments of the personnel lift may reach an ATEX classification. Some embodiments of the personnel lift may function without an external power source such as a motor.

The expression "a number of" refers herein to any positive integer starting from one (1), e.g. to one, two, or three.

The expression "a plurality of" refers herein to any positive integer starting from two (2), e.g. to two, three, or four.

Different embodiments of the present invention are disclosed in the dependent claims.

### BRIEF DESCRIPTION OF THE RELATED DRAWINGS

Next the invention is described in more detail with reference to the appended drawings in which
Figures 1a-1c illustrates an embodiment of a personnel lift in accordance with the present invention, figure 1a presents a partly exploded view, figure 1b presents the personnel lift in its lowest position and figure 1c presents the personnel lift in an elevated position,
Figure 2 illustrates automatic stopping means for preventing the personnel lift's movement on the ground, and
Figure 3 illustrates a finger protection for covering locking holes of a hollow structural section.

### DETAILED DESCRIPTION OF THE EMBODIMENTS

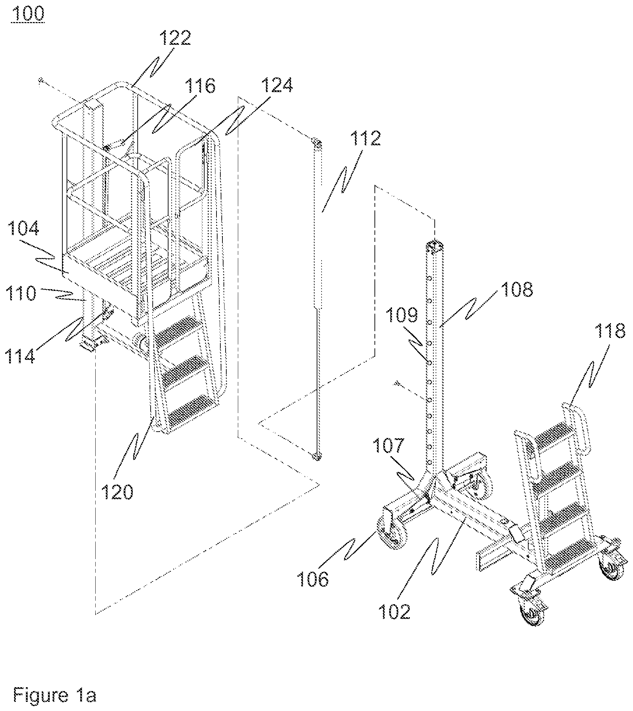

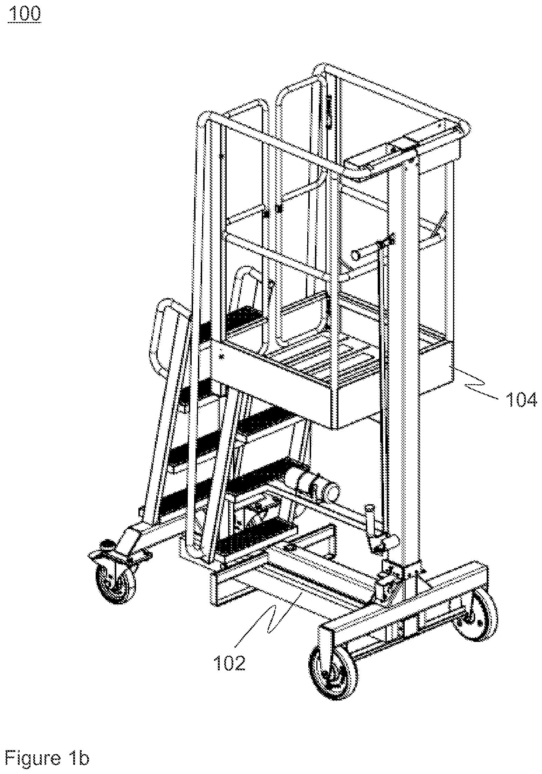

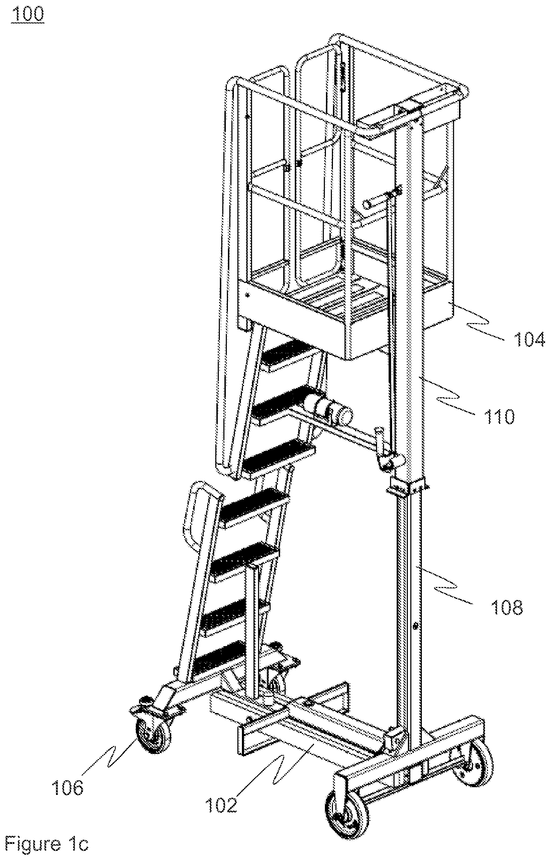

Figures 1a-1c illustrates an embodiment of a personnel lift 100 in accordance with the present invention. The personnel lift 100 comprises a base structure 102 and a work platform 104. The work platform moves essentially vertically. Preferably, the work platform moves vertically. Alternatively, the movement may deviate from vertical movement. In some embodiments the trajectory may form a angle to the horizontal line, such as 5 degree, 15 degree or 30 degree angle.

The base structure 102 has wheels 106 for moving the personnel lift on the ground. In a preferable embodiment the base structure 102 has four wheels. In other alternative embodiments the base structure may have more or less wheels such as two, six or eight, for example. The wheels 106 may comprise stoppers 107 for securing the personnel lift to its work place. The stopping means 107 may be manual or automatic stoppers, for example. Automatic stopping means may actuate as soon as the work platform 104 is elevated.

The personnel lift 100 comprises a telescopic mast. In a preferable embodiment, the telescopic mast comprises two hollow structural sections 108, 110. The first hollow structural section 108 is secured to the base structure 102. The second hollow structural section 110 is secured to the work platform 104. The second hollow structural section 110 is arranged to move along the first hollow structural section 108. In a preferable embodiment, the second hollow structural section 110 is an outer structural section that is arranged around the first inner sructrual section 108. In some embodiments, the first structural section may be the outer section and the second section the inner section. The first hollow structural section 108 may comprise a number of locking holes 109 for securing the work platform 104.

The personnel lift 100 comprises a gas spring 112. The gas spring may be arranged inside the hollow structural sections 108, 110. The gas spring 112 may be secured in the upper end of the second hollow structural section 110 and in the lower end of the first hollow structural section 108. The gas spring 112 comprises integrated dampening means for allowing controlled movement of the work platform 104. The dampening means allow almost constant movement of the moving work platform without being affected by the weight of the person on the work platform. The dampening means may allow the gas spring to have a low speed and may allow it to decelerate in both ends of its trajectory such that the work platform doesn't bump in the ends of its trajectory. The movement in one direction (up or down) may take 5-8 seconds. The gas spring 112 provides a force that is preferably 100-2000N, more preferably 300-1500N and most preferably 500-1000N. With such force the moving work platform may elevate advantageously when empty. The work platform may move down advantageously by the load of a person, preferably 50-150 kg.

The personnel lift 100 comprises a first handle 114 and a second handle 116. The lift 100 is elevated by operating the first handle 114. The first handle 114 actuates the gas spring 112 such that the work platform 104 is elevated. The second handle 116 is operated to lower the work platform 104. The second handle 116 releases the gas spring 112 such that the work platform 102 is lowered by the weight of the person standing on the work platform 102. Alternatively, the first and second handle for actuating and releasing the gas spring may be buttons, for example.

The first handle 114 is arranged in the lower end of the telescopic mast such that it may be operated from the ground level. The first handle 114 may be arranged in the lower end of the second hollow structural section 110, for example. The second handle 116 is arranged in the upper end of the telescopic mast such that it may be operated from the work platform 104. The second handle may be arranged to the upper end of the second hollow structural section 110, for example.

The personnel lift 100 comprises ladders 118, 120. The ladders may comprise two separate sections of steps. The first lower section of steps 118 may be mounted to the base structure 102. The second upper section of steps 120 may be mounted to the work platform 104. In one embodiment, when the work platform 104 is lowered to the ground level, the second section of steps 120 is placed infront of the first section of steps 118. When the work platform 104 is elevated, the second section of steps 120 elevates along with the work platform 104 such that they form continuous ladders with the lower section of steps 118.

The work platform 104 may also comprise a cage structure 122 for securing the person working on the work platform. The cage structure 122 may comprise a number of vertical and horizontal bars, for example. The cage structure 122 may also comprise a gate 124 in the upper end of the ladders 120 such that a person may enter the work platform 104 by opening the gate 124 and securing himself/herself by closing the gate 124.

The personnel lift may be constructed mainly from steel or other solid material suitable for such invention. Plastic and rubber may be used in some parts of the structure as well, for example.

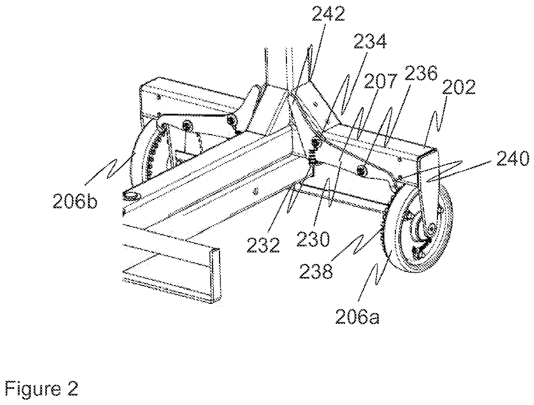

Figure 2 illustrates automatic stopping means 207 for preventing the personnel lift's movement on the ground. The stopping means 207 comprises a disc 230, a spring 232, and two attachment means 234, 236. A cogwheel 238 may be arranged on the inside of the wheel 206. The disc 230 may be attached to the base structure 202 with the attachment means 234, 236. The disc may be arranged to the base structure 202 such that the first end 240 of the disc settles in the cogwheel when the work platform (not in the figure) moves up. The spring 232 pushes the second end 242 up such that the first end 240 settles in the cogwheel. The second end 242 thereby prevents the movement of the wheel 206a. The second hollow structural section (not in the figure) that is attached to the work platform presses the second end 242 down when the work platform is moved down. Thereby, the first end 240 moves out from the cogwheel 238 and allows the wheel 206a to move. Stopping means 207 may be arranged to both front wheels 206a and 206b. This kind of anti-surfing brake structure does not require a large force for releasing the brake. The brake also does not slide. The brake structure is thus reliable compared to e.g. brakes based on friction.

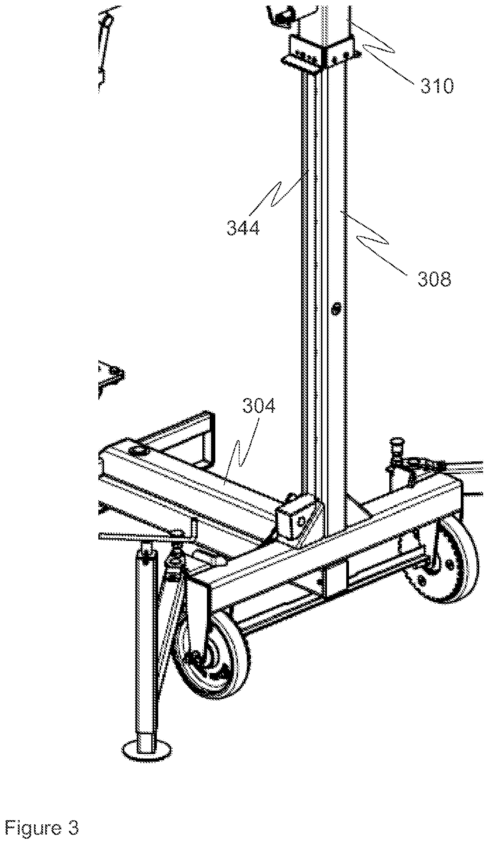

Figure 3 illustrates a finger protection for covering locking holes of the first hollow structural section 308. The finger protection comprises a constant force spring 344. The costant force spring is in a roll when the work platform is lowered and the second hollow structural section 310 is down. When the work platform is moved up and the second hollow structural section 310 moves up along with the work platform, the constant force spring 344 rolls over the locking holes. The constant force spring 344 may provide an electrically conducting bridge between the base structure 304 and the work platform.

The electrically conducting bridge is an important feature for grounding the structure. Such structure may allow an ATEX classification which allows usage of the personnel lift in the petrochemistry and food industry. In these industries sparks caused by static electricity need to be eliminated by grounding the used equipments.

Consequently, a skilled person may on the basis of this disclosure and general knowledge apply the provided teachings in order to implement the scope of the present invention as defined by the appended claims in each particular use case with necessary modifications, deletions, and additions.

## Claims

1. A personnel lift (100) for elevating a work platform, the lift comprising
- a base structure (102) for securing the lift to the ground,
- a work platform (104) that is essentially vertically movable, and
- a gas spring (112) for elevating an empty work platform (104),
**characterised in that**
the lift comprises a telescopic mast for allowing the work platform (104) to move essentially vertically, and wherein the lift comprises first means (114) for actuating the gas spring (112) for elevating the work platform (104), and second means (116) for releasing the gas spring (112) for lowering the work platform (104) by the weight of the person on the work platform (104), and wherein the first means (114) are arranged in the lower end of the telescopic mast such that the first means may be operated from the ground level, and wherein the second means (116) are arranged in the upper end of the telescopic mast such that the second means may be operated from the work platform (104).

2. The personnel lift (100) of claim 1, wherein the gas spring (112) provides a force that is preferably 100-2000N, more preferably 300-1500N and most preferably 500N-1000N for elevating the empty work platform (104).

3. The personnel lift (100) of any preceding claim, wherein the gas spring (112), when released, lowers the work platform (104) by a load of a person, preferably 50-150kg.

4. The personnel lift (100) of any preceding claim, wherein the gas spring (112) comprises integrated dampening means for allowing controlled vertical movement.

5. The personnel lift of any preceding claim, wherein the mast comprises at least two hollow structural sections wherein a first hollow structural section (108) is arranged to the base structure (102) and a second hollow structural section (110) is arranged to the work platform (104), and wherein the second hollow structural section (110) is arranged to move along the first hollow structural section (108).

6. The personnel lift of claim 5, wherein the gas spring (112) is arranged inside of the at least two hollow structural sections.

7. The personnel lift (100) of any preceding claim, wherein the lift comprises wheels (106) for moving the lift on the ground.

8. The personnel lift (100) of claim 7, wherein at least one wheel comprises automatic stopping means (207) that prevents the movement of the wheel when the work platform (104) is elevated and that allows the wheel to move when the work platform (104) is in its lowest position.

9. The personnel lift (100) of claim 8, wherein the automatic stopping means (207) comprises a disk (230) that pivots in and out of a cogwheel (238), and which cogwheel (238) is arranged to the side of the wheel, and which disk (230) is blocking the cogwheel (238) when the work platform (104) is elevated and which disk (230) pivots out from the cogwheel (238) when the work platform (104) is in its lowest position.

10. The personnel lift (100) of any preceding claim, wherein the lift comprises ladders for allowing a person to enter the work platform.

11. The personnel lift (100) of claim 10, wherein the ladders comprises at least two separate sections of steps such that a first section of steps (118) is arranged to the base structure (102) and a second section of steps (120) is arranged to the work platform (104), and wherein the second section of steps (120) moves along with the work platform (104), and wherein the first and second section of steps (118, 120) form continuous steps when the work platform (104) is elevated.

## Patentansprüche

1. Personenaufzug (100) zum Anheben einer Arbeitsplattform, wobei der Aufzug Folgendes umfasst:
- eine Basiskonstruktion (102) zum Sichern des Aufzugs am Boden,
- eine Arbeitsplattform (104), die im Wesentlichen vertikal beweglich ist, und
- eine Gasfeder (112) zum Anheben einer leeren Arbeitsplattform (104),
**dadurch gekennzeichnet, dass**
der Aufzug einen Teleskopmast umfasst, der ermöglicht, dass sich die Arbeitsplattform (104) hauptsächlich vertikal bewegt, und wobei der Aufzug ein erstes Mittel (114) zum Betätigen der Gasfeder (112) umfasst, um die Arbeitsplattform (104) anzuheben, und ein zweites Mittel (116) zum Lösen der Gasfeder (112), um die Arbeitsplattform (104) durch das Gewicht der Person auf der Arbeitsplattform (104) abzusenken, und wobei das erste Mittel (114) im unteren Ende des Teleskopmasts derart angeordnet ist, dass das erste Mittel vom Boden aus bedient werden kann, und wobei das zweite Mittel (116) im oberen Ende des Teleskopmasts derart angeordnet ist, dass das zweite Mittel von der Arbeitsplattform (104) aus bedient werden kann.

2. Personenaufzug (100) nach Anspruch 1, wobei die Gasfeder (112) eine Kraft bereitstellt, die vorzugsweise 100-2000 N, noch bevorzugter 300-1500 N und am bevorzugtesten 500 N - 1000 N beträgt, um die leere Arbeitsplattform (104) anzuheben.

3. Personenaufzug (100) nach einem der vorhergehenden Ansprüche, wobei die Gasfeder (112), wenn sie gelöst ist, die Arbeitsplattform (104) durch die Last einer Person, vorzugsweise 50-150 kg, absenkt.

4. Personenaufzug (100) nach einem der vorhergehenden Ansprüche, wobei die Gasfeder (112) ein integriertes Dämpfungsmittel umfasst, um eine gesteuerte vertikale Bewegung zu ermöglichen.

5. Personenaufzug nach einem der vorhergehenden Ansprüche, wobei der Mast mindestens zwei hohle Strukturabschnitte umfasst, wobei ein erster hohler Strukturabschnitt (108) an der Basiskonstruktion (102) angeordnet ist und ein zweiter hohler Strukturabschnitt (110) an der Arbeitsplattform (104) angeordnet ist, und wobei der zweite hohle Strukturabschnitt (110) angeordnet ist, um sich entlang des ersten hohlen Strukturabschnitts (108) zu bewegen.

6. Personenaufzug nach Anspruch 5, wobei die Gasfeder (112) im Inneren der mindestens zwei hohlen Strukturabschnitte angeordnet ist.

7. Personenaufzug (100) nach einem der vorhergehenden Ansprüche, wobei der Aufzug Räder (106) umfasst, um den Aufzug auf dem Boden zu bewegen.

8. Personenaufzug (100) nach Anspruch 7, wobei mindestens ein Rad ein automatisches Anhaltemittel (207) umfasst, das die Bewegung des Rads verhindert, wenn die Arbeitsplattform (104) angehoben wird, und das ermöglicht, dass sich das Rad bewegt, wenn die Arbeitsplattform (104) sich in ihrer niedrigsten Position befindet.

9. Personenaufzug (100) nach Anspruch 8, wobei das automatische Anhaltemittel (207) eine Scheibe (230) umfasst, die in ein Zahnrad (238) hinein- und herausschwenkt, und das Zahnrad (238) seitlich neben dem Rad angeordnet ist, und die Scheibe (230) das Zahnrad (238) blockiert, wenn die Arbeitsplattform (104) angehoben ist, und die Scheibe (230) von dem Zahnrad (238) herausschwenkt, wenn die Arbeitsplattform (104) sich in ihrer niedrigsten Position befindet.

10. Personenaufzug (100) nach einem der vorhergehenden Ansprüche, wobei der Aufzug Leitern umfasst, um einer Person das Betreten der Arbeitsplattform zu ermöglichen.

11. Personenaufzug (100) nach Anspruch 10, wobei die Leitern mindestens zwei getrennte Abschnitte mit Stufen umfassen, so dass ein erster Abschnitt mit Stufen (118) zur Basiskonstruktion (102) angeordnet ist und ein zweiter Abschnitt mit Stufen (120) zur Arbeitsplattform (104) angeordnet ist, und wobei der zweite Abschnitt mit Stufen (120) sich zusammen mit der Arbeitsplattform (104) bewegt, und wobei der erste und der zweite Abschnitt mit Stufen (118, 120) durchgehende Stufen bilden, wenn die Arbeitsplattform (104) angehoben ist.

## Revendications

1. Élévateur de personnel (100) pour le levage d'une plate-forme de travail, l'élévateur comprenant
- une structure de base (102) pour fixer l'élévateur au sol,
- une plate-forme de travail (104) qui est sensiblement mobile verticalement, et
- un ressort à gaz (112) pour lever une plate-forme de travail vide (104),
**caractérisé en ce que** l'élévateur comprend un mât télescopique pour permettre à la plate-forme de travail (104) de se déplacer sensiblement verticalement, et l'élévateur comprend un premier moyen (114) pour actionner le ressort à gaz (112) afin de lever la plate-forme de travail (104), et un second moyen (116) pour relâcher le ressort à gaz (112) afin d'abaisser la forme de travail (104) sous l'effet du poids de la personne se trouvant sur la plate-forme de travail (104), et le premier moyen (114) est disposé à l'extrémité inférieure du mât télescopique, de sorte que le premier moyen peut être activé depuis le niveau du sol, et le second moyen (116) est disposé à l'extrémité supérieure du mât télescopique, de sorte que le second moyen peut être activé depuis la plate-forme de travail (104).

2. Élévateur de personnel (100) selon la revendication 1, dans lequel le ressort à gaz (112) exerce une force qui est de préférence de 100 à 2000 N, plus préférentiellement 300 à 1500 N et le plus préférentiellement 500 N à 1000 N pour lever la plate-forme vide (104).

3. Élévateur de personnel (100) selon l'une quelconque des revendications précédentes, dans lequel le ressort à gaz (112), une fois relâché, abaisse la plate-forme de travail (104) sous l'effet du poids d'une personne, de préférence 50 à 150 kg.

4. Élévateur de personnel (100) selon l'une quelconque des revendications précédentes, dans lequel le ressort à gaz (112) comprend un moyen d'amortissement intégré pour permettre un mouvement vertical contrôlé.

5. Élévateur de personnel selon l'une quelconque des revendications précédentes, dans lequel le mât comprend au moins deux sections structurelles creuses, une première section structurelle creuse (108) étant disposée sur la structure de base (102) et une seconde section structurelle creuse (110) étant disposée sur la plate-forme de travail (104), et la seconde section structurelle creuse (110) est conçue pour se déplacer le long de la première section structurelle creuse (108) .

6. Élévateur de personnel selon la revendication 5, dans lequel le ressort à gaz (112) est disposé à l'intérieur des au moins deux sections structurelles creuses.

7. Élévateur de personnel (100) selon l'une quelconque des revendications précédentes, dans lequel l'élévateur comprend des roues (106) pour déplacer l'élévateur sur le sol.

8. Élévateur de personnel (100) selon la revendication 7, dans lequel au moins une roue comprend un moyen d'arrêt automatique (207) qui empêche le mouvement de la roue lorsque la plate-forme de travail (104) est levée et qui permet à la roue de se déplacer lorsque la plate-forme de travail (104) est dans sa position la plus basse.

9. Élévateur de personnel (100) selon la revendication 8, dans lequel le moyen d'arrêt automatique (207) comprend un disque (230) qui pivote à l'intérieur et à l'extérieur d'une roue dentée (238), et laquelle roue dentée (238) est disposée sur le côté de la roue, et lequel disque (230) bloque la roue dentée (238) lorsque la plate-forme de travail (104) est levée et lequel disque (230) pivote vers l'extérieur depuis la roue dentée (238) lorsque la plate-forme de travail (104) est dans sa position la plus basse.

10. Élévateur de personnel (100) selon l'une quelconque des revendications précédentes, dans lequel l'élévateur comprend des échelles pour permettre à une personne d'entrer sur la plate-forme de travail.

11. Élévateur de personnel (100) selon la revendication 10, dans lequel les échelles comprennent au moins deux sections séparées de marches, de sorte qu'une première section de marches (118) est disposée sur la structure de base (102) et qu'une seconde section de marches (120) est disposée sur la plate-forme de travail (104), et la seconde section de marches (120) se déplacent en même temps que la plate-forme de travail (104), les première et seconde sections de marches (118, 120) formant des marches continues lorsque la plate-forme de travail (104) est levée.
